# EUROPEAN PATENT APPLICATION

(11) **EP 1 191 467 A1**
(43) Date of publication of application: **27.03.2002**
(21) Application number: 00203291.0
(22) Date of filing: 25.09.2000
(51) Int. Cl.: G06F 17/60

(54) **Method of improving the effectiveness of an advertisement**

(71) Applicant: 3M Innovative Properties Company, St. Paul, Minnesota 55133-3427 (US)
(72) Inventor: Acito, Paul, 1831 Diegem (BE)
(74) Representative: Voortmans, Gilbert J.L.

(57) **Abstract**

The present invention relates to a method of improving the effectiveness of advertisement using a computer system comprising:
- a locator unit of which the geographic position can be retrieved through wireless communication;
- electronically stored advertisement location data comprising the geographic location of one or more advertisements;
- electronically stored person identification data comprising data describing identity or profile of a person and locator ID data identifying the locator unit associated with said person;
- a computer coupled to a communication unit capable of wirelessly retrieving the geographic position of said locator unit;
characterized by:
determining current position of a person by causing said computer to retrieve the locator unit ID data corresponding to the locator unit associated with said person from the electronically stored person identification data and causing said computer to pass said locator unit ID data to said communication unit thereby retrieving the geographic position of the corresponding locator unit from said communication unit.

## Description

### 1. Field of the invention.

This invention relates to a method of improving the effectiveness of advertisement such as advertisements contained on a wall or floor in public places. In particular, the present invention relates to a method wherein the proximity of a person to an advertisement is determined and whereby the closeness of a person to a particular advertisement triggers a predetermined event.

### 2. Background of the invention.

With the development of new communication media, in particular electronic communication media such as internet and digital mobile phones, new methods of advertisements have been developed concurrently with the aim of increasing effectiveness of advertisement. For example, many websites on the internet contain advertisements which may be interactive and which may be tailored to a particular profile of a person viewing the site. However, it is believed that internet users pay only little attention to these advertisements. Moreover, software has been developed to disable these advertisement on a web page to improve the speed of downloading web pages for viewing.

GB 2344009 describes an advertisement system in which a TV or radio receiver enables targeted advertising dependent on the geographic location of the TV or radio receiver. To achieve this, the receiver includes a unit that enables geographic determination of the receiver. GB 2344009 discloses as examples of such locator unit, a cellular phone, a long range radio navigation receiver or a Global Positioning Satellite (GPS) receiver. The disadvantage of this system however is that it requires an adapted TV or radio set and therefore likely replacement of a persons current TV or radio.

JP 10254396 describes a system in which a portable phone is provided next to an advertisement enabling a customer to establish a communication with the advertiser. However, such a system is cumbersome and expensive.

Advertisements methods have further been developed by which advertisement is sent to a user's portable phone such as for example a GSM phone or a WAP phone. In such a system the users subscribe or otherwise agree to receive advertisement on their portable phone in return of which they may receive free services or a discount on their phone bill. This system however has the disadvantage that the size of the display of the portable phone is limited thereby limiting the attractiveness of the advertisement. Furthermore, portable phones that are currently mostly used generally only allow character-based information thereby further limiting the ability to create complex and attractive advertisement.

Conventional advertisement whereby complex and large graphics representing advertisement may be placed on a wall or floor has the disadvantage that such advertisement is passive and often goes unnoticed to persons passing the advertisement. Moreover, it is generally difficult or cumbersome for the advertiser to obtain information as to who may have viewed his advertisement. Such information may be useful to the advertiser to create effectiveness of his advertisement by placing it in areas where persons likely interested in his products are more likely to view his advertisement.

It would thus be desirable to improve the advertisement methods. In particular, it would be desirable to more easily obtain information as to which persons view an advertisement and/or to interact with such persons. It is furthermore desirable that such improved advertisement method can be implemented in an easy and cost effective way.

### 3. Disclosure of the invention.

It has been found that the effectiveness of advertisement may be improved by providing a computer system that comprises:
- a locator unit of which the geographic position can be retrieved through wireless communication;
- electronically stored advertisement location data comprising the geographic location of one or more advertisements such as for example a graphic on a wall or floor;
- electronically stored person identification data;
- a computer coupled to a communication unit capable of wirelessly retrieving the geographic position of the locator unit.

The computer that is coupled to the communication unit may be a conventional personal computer including a CPU, RAM memory and optionally a magnetic disk and/or a CD-ROM or DVD drive. The computer is conveniently coupled to the communication unit through a computer network, e.g. the internet. Accordingly, the computer will generally also include a network connection such a network card, e.g. an ethernet network card or a modem for dial-up networking.

The electronically stored advertisement location data and electronically stored person identification data may be stored on any computer readable medium such as a magnetic disk, a CD-ROM or a DVD. The electronically stored advertisement location data will generally comprise the location of the advertisement together with a description of the content of the advertisement and/or the advertiser. By 'advertisement' in connection with the present invention is meant information about a product or service that is being displayed and that is generally aimed at persuading customers to buy the particular product or service. The advertisement will generally be displayed in public places, for example on a bill board or as a graphic painted or adhered to a wall, floor or other supporting structure. The advertisement may for example also be displayed or projected on a wall or floor by a display or projector controlled by computer. Accordingly, such advertisement can be dynamically updated.

The electronically stored person identification data comprises the identity or profile of a person and the locator ID data identifying the locator unit associated with the person. The person identification data will generally include at least data for contacting the person. The person identification data may contain a person's identity such as name, address, phone number, fax number and e-mail address. Alternatively, if the person does not wish to have his full identity stored, the person identification data would include a general profile together with data for contacting the person. For example, the profile may include certain fields of interest of the person, credit card information or demographic information.

In accordance with the method of the invention, the current position of a person is retrieved by a computer. To determine the current position, the computer retrieves the locator unit ID data of the person from the electronically stored identification data associated with him. The computer then uses the locator unit ID data to communicate with the locator unit of the person and to thereby receive the current location of the person. For example, the locator unit could be a cellular phone which is in communication with a cellular mobile telephone network such as for example a GSM network. Since the GSM network offers the ability to locate the position of a cell phone, by passing the locator unit ID data, for example the phone number of the cell phone, to the GSM network, the position of the cell phone can be retrieved. Alternatively, the locator unit could comprise a Global Positioning Satellite(GPS) receiver through which the locator unit could retrieve its geographic position which can then be communicated wirelessly to the communication unit upon request and transferred to the computer.

The distance of the current position of the person to an advertisement stored in the advertisement location data would then be calculated by retrieving the location of the advertisement and having a computer calculate the distance. A suitably programmed computer then determines that the person is close to an advertisement, i.e. the distance of his current position to that of an advertisement is not more than a proximity value, the computer carries out a set of instruction to electronically store log data comprising at least a reference to the electronically stored person identification data of the person and at least a reference to the advertisement to which that person is close and/or, a computer carries out a set of instructions comprising processing data stored in the person identification data associated with the person.

It should be noted here that for example the computer retrieving the person's position, the computer calculating the distance between an advertisement and a person's position and the computer carrying out the set of instructions comprising processing data stored in the person identification data associated with the person can be one and the same computer or can be different computers that may be part of a network. Thus, different steps of the method may be carried out by different computers that are for example connected with each other via the internet. Also, the electronically stored person identification data and advertisement location data may be retrieved by different computers that are networked with the computer calculating the difference between a person's position and the location of an advertisement.

The set of instructions carried out by a computer and comprising processing of data stored in the person identification data may cause interaction with the person that is found close to an advertisement. By the term 'interaction' is meant that the person can note an effect that he was close to an advertisement. Interaction may for example include the person receiving an electronic message such as an e-mail on his computer, pre-recorded audio or video, a SMS message on his cellular phone, updating of an award account, receiving a voice message on his voice-mail system and receiving a coupon in his mail. For example, the instructions may retrieve an e-mail address of the person from his person identification data and an electronic message may be sent to his e-mail address. Such e-mail message content may be dependent on the advertisement to which he has been found to be close, for example an electronic copy of the advertisement could be e-mailed or he could receive an electronic coupon for the product advertised.

If no advertisement is found close to the person's current location, the method could be carried out again for locating another person or alternatively, the method could be carried out again for the same person to continue monitor whether he comes within a predefined proximity of an advertisement. The method could for example include a step of determining whether a particular person is likely to come within the predefined proximity of an advertisement based on the distance of his current position to that on an advertisement and his velocity of movement which can be determined by monitoring the person's position with time. If the person is likely to approach an advertisement, his position would be continued to monitor. If not an alternative person could be monitored.

By causing the interaction with the person, the advertisement will become more effective as the person passing the advertisement, through the interaction, will be made more aware of the advertisement whereas he previously would not have been. The method has further the advantage that conventional advertisement is being used without the space and other system limitations associated with other advertisement means. Further, the present method can be easily implemented at a fairly low cost without the need for special adapted equipment with the target audience of the advertisement.

In another aspect, the invention relates to a computer readable medium comprising person identification data comprising data describing identity or profile of a person and locator ID data identifying a locator unit of which the geographic position can be retrieved through wireless communication and which locator unit is associated with said person. The person identification data is in a form suitable for use in the method of this invention. The computer readable medium is further loaded on a computer that is programmed to carry out at least part of the method or that is capable of communicating with at least one computer carrying out at least a part of the method. For example, the computer readable medium can be a hard disk of a computer with the person identification data or a CD-ROM loaded in a CD-ROM drive of a computer and containing the person identification. This computer can be for example a computer that is programmed to carry out part of the method such as for example step of retrieving a person's geographic location or can be a computer that is in communication (e.g. through a computer network) with such a computer.

Similarly, the present invention also relates to a computer readable medium comprising advertisement location data comprising the geographic location of one or more advertisements in a form suitable for use in the method of the invention. The computer readable medium is further loaded on a computer that is programmed to carry out at least part of the method or that is capable of communicating with at least one computer carrying out at least a part of the method.

In a further aspect, the invention relates to a computer suitably programmed to
(i) obtain input data A comprising person identification data describing identity or profile of a person and locator ID data identifying a locator unit of which the geographic position can be retrieved through wireless communication;
(ii) obtain input data B comprising advertisement location data comprising the geographic location of one or more advertisements;
(iii) to cause retrieval of a person's current geographic position by passing locator ID data of the locator unit associated with that person to a communication unit capable of wirelessly retrieving the geographic position of said locator unit;
(iv) to cause calculation of the distance between the person's current geographic position and the geographic location of the one or more advertisements;
(v) to cause comparison of the calculated distance with a proximity value.

The computer is further suitably programmed to cause, in the case that the calculated distance is not more than a proximity value, electronically storing of log data comprising person identification data of said person or a reference thereto and data representing information about the advertisement that is within a distance of the current position of said person not more than the proximity value or a reference to said data representing information about said advertisement. Additionally or alternatively, the computer is further suitably programmed to cause, in the case that the calculated distance is not more than a proximity value, processing of data stored in the person identification data associated with the person to cause an interaction with that person.

### 4. Brief description of the drawings

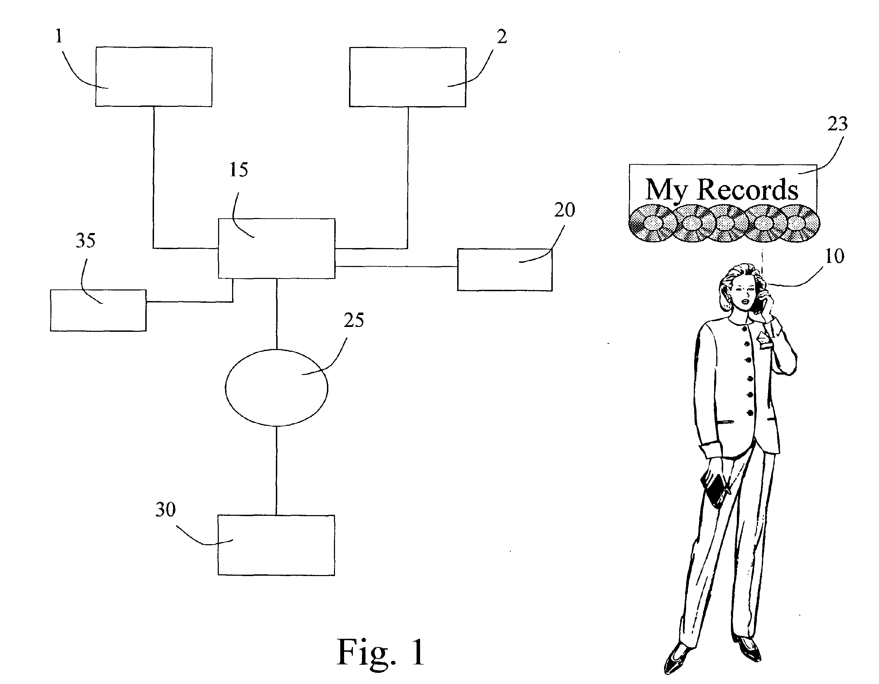

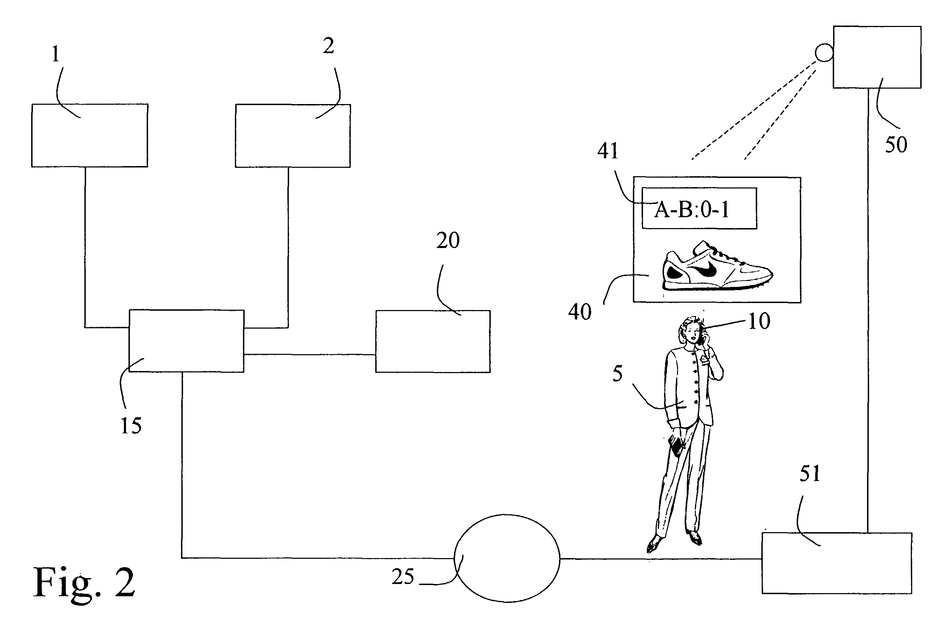

Figures 1 and 2 show a schematic representation of two embodiments of this invention.

### 5. Detailed description of preferred embodiments

Referring to figure 1, there is shown a first embodiment of this invention.
Computer 15 retrieves the person identification data 2 of person 5 to determine the geographic location of person 5. The person identification data 2 is electronically stored, for example on a magnetic disk of a computer. The person identification data 2 could have been previously obtained from the person through a registration service of for example an advertiser. Conveniently, such registration service would be carried out through an electronic form that a person can fill out for example at a web site of the advertiser. If computer 15 is connected to the internet or otherwise with the advertiser, computer 15 could retrieve the person identification data 2 from the advertiser's computer.

Person 5 carries with him a cell phone 10, the geographic location of which can be determined wirelessly by communication unit 20, for example a GSM network. Computer 15 extracts the ID of cell phone 10 (for example the phone number) of person 5 from the person identification data 2 and instructs communication unit 20 to locate the cell phone 10 corresponding to the ID. Communication unit 20 then determines the geographic location of cell phone 10 and therefore the location of person 5 and communicates that information to computer 15. Computer 15 retrieves the geographic location of advertisement 23 from the advertisement location data 1. Computer 15 then calculates the distance between the geographic locations of the advertisement 23 and person 5 and compares the calculated distance with a proximity value. If computer 15 determines that the calculated distance is equal or less than the proximity value, computer 15 may store log data 35. Such log data may comprise the identification data of person 5, the time when person 5 is found close to the advertisement 23, the location of the advertisement and a description of the advertisement. Such log data can then be later processed by computer 15 or another computer to analyze which kind of persons have passed or seen the advertisement. For example, an advertiser might be interested in knowing whether the persons passing his advertisement have an interest in the type of product or services he is offering. In the example illustrated in figure 1, the advertiser, a records company, might be interested in the music style of the persons viewing his advertisement so as to tailor his advertisement to the audience that most frequently passes at the location of his advertisement.

Alternatively or additionally, computer 15 retrieves information about the advertisement 23 from the advertisement location data or separately stored advertisement data. Based on such data, computer 15 may carry out a set of instructions causing communication unit 20 to send a SMS message to cell phone 10 of person 5. Such SMS message may contain information on new records that have been released or on a special promotion. If the person identification data includes information as to what type of music person 5 is interested in, the SMS message sent by computer 15 through communication unit 20 could be tailored to special promotion or new releases for the particular music style that person 5 has an interest for.

Instead of sending an SMS message, computer 15 could call person 5 through communication unit 20 and play a particular record or fragment of a record, for example a new release, through the person's cell phone 10. Still further, computer 15 could carry out a set of instruction to send an e-mail through communication network 25, for example the internet, to computer 30 of person 5. For this purpose, computer 15 would retrieve the e-mail address of person 5 from his person identification data. The content of such e-mail would be compiled by computer 15 on the basis of for example information contained in the person identification data 2, the location of the advertisement contained in advertisement location data 1 and the nature of the particular advertisement. For example, in the present example, the e-mail may inform person 5 of new release for the music style he is interested in, together with some audio fragments thereof and/or an electronic coupon for discount when he buys the particular new release.

A further embodiment of the present invention is illustrated in figure 2. As shown, computer 15 retrieves person identification data 2 for person 5 and extracts therefrom the ID of cell phone 10 carried by person 5. Computer 15 instructs communication unit 20 to retrieve the geographic location 10 and communication unit 20 then communicates the geographic location to computer 15. Computer 15 retrieves advertisement location data 1 and thereby retrieves the geographic location of advertisement 40. Advertisement 40 comprises an advertisement for a particular brand of sport shoes. The advertisement consists of a fixed part displaying a graphic of the shoe with a brand name and some information on the advertiser.
Such graphic may be for example a graphics film adhered to the wall. Advertisement 41 further includes a variable part 41 which is projected by projector 50 on the static part of the advertisement. Computer 51 controls projector 50 to display the variable information 41. Computer 51 is connected to computer 15 through a communication network 25 such as for example the internet.

Computer 15 calculates the distance between the geographic location of the advertisement 40 and person 5 and if computer 15 determines that this distance is not more than a preset proximity value, computer 15 will carry out instructions to cause computer 51 to display variable information 41 depending on information stored in the person identification data associated with person 5. For example, the person identification data in this example may include the favorite soccer team of person 5. Computer 15 would retrieve that information from the person identification data and instruct computer 51 to display for example the score of an ongoing game of the person's soccer team. Computer 51 could retrieve that information through the communication network 25 and program projector 50 to display the current score in variable information part 41.

## Claims

1. Method of improving the effectiveness of advertisement using a computer system comprising:
- a locator unit of which the geographic position can be retrieved through wireless communication;
- electronically stored advertisement location data comprising the geographic location of one or more advertisements;
- electronically stored person identification data comprising data describing identity or profile of a person and locator ID data identifying the locator unit associated with said person;
- a computer coupled to a communication unit capable of wirelessly retrieving the geographic position of said locator unit;
said method comprising the steps of:
a) determining current position of a person by causing said computer to retrieve the locator unit ID data corresponding to the locator unit associated with said person from the electronically stored person identification data and causing said computer to pass said locator unit ID data to said communication unit thereby retrieving the geographic position of the corresponding locator unit from said communication unit;
b) retrieving the electronically stored advertisement location data and having a computer calculate the distance between said geographic locations of said advertisements and said current position of said person;
c) having a computer compare the calculated distances to a proximity value and
d) if a calculated distance is not more than the proximity value,
e) electronically storing log data comprising the electronically stored person identification data of said person or a reference thereto and information about the advertisement that is within a distance of the current position of said person not more than the proximity value or a reference to said information about said advertisement and/or causing a computer to carry out a set of event instructions comprising processing data stored in the person identification data associated with said person to cause an interaction with said person.

2. A method according to claim 1 wherein said set of event instructions further includes processing of data relating to the advertisement to which said person is within a distance of not more than said proximity value.

3. A method according to claim 1 or 2 wherein said interaction with said person comprises sending an electronic message to said person and/or updating an award account of said person.

4. A method according to claim 1 or 2 wherein said set of event instructions includes instructions retrieving a personal interest of said person from said person identification data and causing displaying of information relating to such personal interest on said advertisement to which said person is within a distance of not more than said proximity value.

5. Method according to claim 1 wherein said locator unit is a cell phone and said communication unit is a GSM network.

6. Method according to claim 1 wherein said locator unit comprises a GPS receiver.

7. Method according to claim 1 wherein said electronically stored person identification data comprises an e-mail address of said person and wherein an e-mail message is sent to said person when said calculated distance between said current position of said person and the location of an advertisement electronically stored in said advertisement location data is not more than said proximity value, the content of said e-mail message being dependent on information relating to said advertisement.

8. Method according to claim 1 wherein said electronically stored person identification data comprises a phone number of said person's cell phone and wherein an SMS message is sent to said person when said calculated distance between said current position of said person and the location of an advertisement electronically stored in said advertisement location data is not more than said proximity value.

9. Method according to claim 1 wherein said electronically stored log data is further processed to analyze one or more common features in said person identification data of persons that have been within proximity value distance of an advertisement.

10. Method according to claim 1 wherein if the distance of the current position of the person to the location of any advertisement is more than the proximity value, the position of the person is monitored with time by a computer periodically polling the geographic position of the locator unit associated with said person to determine his velocity and direction of movement and wherein a computer estimates the time needed for the distance of the person to an advertisement stored in the advertisement location data to become equal or less than the proximity value and if the estimated time is less than a preset time, continuing monitoring the position of said person until the distance of the position of the person to the location of an advertisement is not more than the proximity value and then carrying out step d) of the method.

11. Computer readable medium comprising person identification data comprising data describing identity or profile of a person and locator ID data identifying a locator unit of which the geographic position can be retrieved through wireless communication and which locator unit is associated with said person, said person identification data being in a form suitable for use in a method of any of claims 1 to 10 and said computer readable medium being loaded on a computer programmed to carry out at least part of the method of any of claims 1 to 10 or being loaded on a computer that is capable of communicating with at least one computer carrying out at least a part of the method of any of claims 1 to 10.

12. Computer readable medium comprising advertisement location data comprising the geographic location of one or more advertisements said advertisement location data being in a form suitable for use in a method of any of claims 1 to 10 and said computer readable medium being loaded on a computer programmed to carry out at least part of the method of any of claims 1 to 10 or being loaded on a computer that is capable of communicating with at least one computer carrying out at least a part of the method of any of claims 1 to 10.

13. Computer suitably programmed to
(i) obtain input data A comprising person identification data describing identity or profile of a person and locator ID data identifying a locator unit of which the geographic position can be retrieved through wireless communication;
(ii) obtain input data B comprising advertisement location data comprising the geographic location of one or more advertisements;
(iii) to cause retrieval of a person's current geographic position by passing locator ID data of the locator unit associated with said person to a communication unit capable of wirelessly retrieving the geographic position of said locator unit;
(iv) to cause calculation of the distance between said person's current geographic position and the geographic location of said one or more advertisements;
(v) to cause comparison of said calculated distance with a proximity value;
and said computer being suitably programmed to cause, in case said calculated distance is not more than said proximity value, (i) electronically storing of log data comprising person identification data of said person or a reference thereto and data representing information about the advertisement that is within a distance of the current position of said person not more than the proximity value or a reference to said data representing information about said advertisement, or (ii) processing data stored in the person identification data associated with said person to cause an interaction with said person.

14. A computer readable medium comprising a computer program comprising instructions to be carried out by a computer, said computer program when loaded on a computer causing said computer to be programmed as defined in claim 12.
